# EUROPEAN PATENT SPECIFICATION

(11) **EP 1 829 157 B1**
(45) Date of publication and mention of the grant of the patent: **20.01.2010**
(21) Application number: 05852444.8
(22) Date of filing: 29.11.2005
(51) Int. Cl.: H01Q 9/28

(54) **COMPACT ANTENNAS FOR ULTRA WIDE BAND APPLICATIONS**
COMPAKTE ANTENNEN FÜR ULTRABREITBANDANWENDUNGEN
ANTENNES COMPACTES POUR DES APPLICATIONS DE BANDE ULTRALARGE

(30) Priority: 29.11.2004 US 999745
(43) Date of publication of application: 05.09.2007
(73) Proprietor: QUALCOMM INCORPORATED, San Diego, California 92121 (US)
(72) Inventor: MOHAMMADIAN, Alireza Hormoz, San Diego, California 92130 (US); BURKE, Joseph Patrick, Carlsbad, California 92009 (US); SOLIMAN, Samir S., San Diego, California 92131 (US)
(74) Representative: Heselberger, Johannes
(86) International application number: PCT/US2005/043187
(87) International publication number: WO 2006/060422

(56) References cited:
- EP-A- 0 301 216
- GB-A- 2 359 664
- US-A1- 2004 217 912
- US-B1- 6 337 666

## Description

### BACKGROUND

### FIELD

The present disclosure relates generally to antennas, and more specifically, to compact antennas for Ultra Wide Band applications.

### BACKGROUND

Portable devices capable of wireless communications are currently available in several different forms, including mobile telephones and personal digital assistants (PDAs). A portable device such as a wireless modem may also be used to provide such capabilities to a laptop or other computer. The technology supporting these devices is expanding rapidly and today includes such features as Internet access, email services, simultaneous transmission of voice and data, and video. Ultra-Wideband (UWB) technology is just one example of emerging technology being developed to support such devices. UWB provides high speed communications over an extremely wide bandwidth. At the same time, UWB signals are transmitted in very short pulses that consume very little power.

UWB antennas need to have an operating frequency band between 3.1 to 10.6 GHz. These antennas typically occupy a larger volume than conventional narrow band antennas. This can pose a problem in most practical applications especially when the antenna is intended for a portable wireless device where the real estate is scarce. The situation may become even worse when there is a need to use diversity combining techniques where at least two antennas need to share the available real estate.

One type of antenna commonly used in high bandwidth applications is the chip antenna. A chip antenna includes a ceramic substrate supporting metallic traces positioned over a ground plane with the ground removed from underneath the chip. One problem with this antenna is that the ground plane tends to increase the overall size of the antenna. Although, the ground plane for the printed circuit board supporting the electronics may be used in some applications, the antenna dictates the size of the plane which is not desirable. Also, induced RF currents on the printed circuit board may cause receiver desensitization, thereby limiting the useful range of the portable wireless device. In diversity applications, there would be increased coupling between the antennas since they share the same ground plane, thereby reducing diversity gain.

Accordingly, there is a need for a high bandwidth compact antenna for portable wireless devices. The high bandwidth compact antenna should be designed in a way that does not significantly degrade the performance of the electronics.

US Patent Application US 2004/0217912 A1 discloses an antenna that includes a first plane, a second plane spaced apart from the first plane, a first radiating surface, positioned substantially on the first plane, to act as a poise, a second radiating surface to act as a counterpoise, and an end-feed microstrip positioned on the second plane, wherein the first radiating surface and the second radiating surface are electromagnetically coupled to the end-feed microstrip.

### SUMMARY

In one aspect of the present invention, an elliptic dipole antenna includes a poise and counterpoise each having an elliptical shape, and a substrate supporting the poise and counterpoise, the substrate having a closed three-dimensional shape.

In another aspect of the present invention, a wireless device includes a transceiver, and an elliptic dipole antenna. The elliptic dipole antenna includes a poise and counterpoise each having an elliptical shape, and a substrate supporting the poise and counterpoise, the substrate having a closed three-dimensional shape.

It is understood that other embodiments of the present invention will become readily apparent to those skilled in the art from the following detailed description, wherein various embodiments of the invention are shown and described by way of illustration. As will be realized, the invention is capable of other and different embodiments and its several details are capable of modification in various other respects, all without departing from the spirit and scope of the present invention. Accordingly, the drawings and detailed description are to be regarded as illustrative in nature and not as restrictive.

### BRIEF DESCRIPTION OF DRAWINGS

Aspects of the present invention are illustrated by way of example, and not by way of limitation, in the accompanying drawings, wherein:
FIG. 1 is a conceptual block diagram illustrating an example of a wireless device employing an elliptic dipole antenna formed around a substrate;
FIG. 2 is a perspective view illustrating an example cited as useful for understanding the invention of a flat elliptic dipole antenna with a microstrip feed and a flexible printed circuit board substrate;
FIG. 3 is a perspective view illustrating an example of a elliptic dipole antenna with a microstrip feed formed around a cylindrical flexible printed circuit board substrate;
FIG. 4 is a perspective view illustrating an example of an elliptic dipole antenna with a microstrip feed formed around a rectangular flexible printed circuit board substrate;
FIG. 5 is a perspective view illustrating an example cited as useful for understanding the invention of a flat elliptic dipole antenna with a coplanar waveguide feed and a flexible printed circuit board substrate;
FIG. 6 is a perspective view illustrating an example of an elliptic dipole antenna with a coplanar waveguide feed formed around a cylindrical flexible printed circuit board substrate;
FIG. 7 is a perspective view illustrating an example of an elliptic dipole antenna with a coplanar waveguide feed formed around a rectangular flexible printed circuit board substrate;
FIG. 8 is a perspective view illustrating an example of an elliptic dipole antenna with a coplanar waveguide feed formed around a cylindrical plastic carrier;
FIG. 9 is a perspective view illustrating an example of an elliptic dipole antenna with a coplanar waveguide feed formed around a rectangular plastic carrier,
FIG. 10A-10B is a perspective view illustrating an example of a flat elliptic dipole antenna having a partial elliptical poise with a microstrip feed and a flexible printed circuit board substrate; and
FIG. 11 is a perspective view illustrating an example of a elliptic dipole antenna having a partial elliptical poise with a microstrip feed formed around a rectangular flexible printed circuit board substrate.

### DETAILED DESCRIPTION

The detailed description set forth below in connection with the appended drawings is intended as a description of various embodiments of the present invention and is not intended to represent the only embodiments in which the present invention may be practiced. The detailed description includes specific details for the purpose of providing a thorough understanding of the present invention. However, it will be apparent to those skilled in the art that the present invention may be practiced without these specific details. In some instances, well-known structures and components are shown in block diagram form in order to avoid obscuring the concepts of the present invention.

In one embodiment of the antenna, an elliptic dipole may be formed around a substrate. The substrate may be any closed three-dimensional shape, including by way of example, a cylindrical, rectangular, triangular, spherical, or any other suitable shape. This configuration provides a compact design that can be used on most portable wireless device. In the case of diversity applications, multiple antennas may be arranged on the portable wireless device with adequate spacing to provide sufficient diversity gain. The elliptic dipole antenna provides high bandwidth suitable for UWB applications. It also provides an omni-directional radiation pattern in the azimuth plane as well as a high degree of polarization purity. The elliptic dipole antenna is also a balanced antenna that tends to de-couple the antenna system from the electronics to which it is connected.

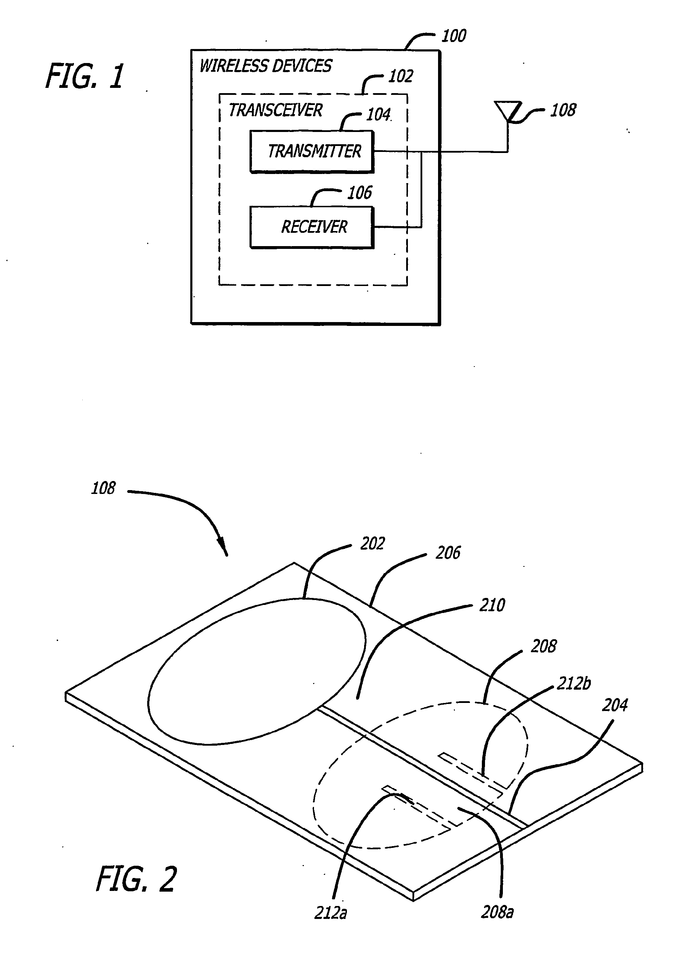

FIG. 1 is a conceptual block diagram illustrating an example of a wireless device employing an elliptic dipole antenna formed around a substrate. This elliptic dipole antenna is well suited for portable wireless devices such as mobile telephones, PDAs, laptops, and other computers, but is not limited to such devices. It may be used on any wireless device, especially those wireless devices requiring wide band communications.

The wireless device 100 shown in FIG. 1 may be equipped with a transceiver 102. The transceiver 102 may be a UWB transceiver capable of code division multiple access (CDMA) communications, or any other type of communications. CDMA is a modulation and multiple access scheme based on spread spectrum communications which is well known in the art. The transceiver 102 may include a transmitter 104 and a receiver 106 coupled to an elliptic dipole antenna formed around a substrate 108. The receiver 106 may be used to downconvert a signal from the antenna 108 to baseband, as well as provide spread-spectrum processing, demodulation and decoding of the baseband signal. The transmitter 104 may be used to encode, modulate, and provide spread-spectrum processing of a baseband signal, as well as provide upconversion for the baseband signal to a frequency suitable for over the air transmission through the antenna 108. In alternative embodiments of the wireless device 100, multiple antennas of similar construction may be used to achieve gain due to spatial displacement of the antennas and combining techniques utilized by the receiver 106.

FIG. 2 is a perspective view showing a flat elliptic dipole antenna with a microstrip feed and flexible printed circuit board substrate. The phantom lines are edges hidden from view. The elliptic dipole antenna 108 may include a poise 202 with a microstrip feed 204 on one surface of the substrate 206 and a counterpoise 208 on the other surface of the substrate 206. The poise 202 and counterpoise 208 may have an "elliptical shape" which is defined herein to include not only ellipses, but partial ellipses such as half or quarter ellipses, as well as full or partial circles. The substrate 202 may be a flexible printed circuit board such as DuPont™ Pyralux® AP™ or other suitable polyimide or epoxy-based film. In the embodiment shown, the poise 202 is offset slightly from the counterpoise 208 in the plane of the substrate to form a gap 210. The microstrip feed 204 is used to excite the gap 210, thereby causing the antenna 108 to radiate in the transmit mode. Alternatively, the poise 202 and counterpoise 208 may be excited by an incoming radiated signal in the receive mode. The counterpoise may include a portion 208a which provides a ground plane for the microstrip feed 204. Two Isolation gaps 212a and 212b may be used to separate the ground plane for the microstrip feed 204 from the remainder of the counterpoise 208.

The poise 202, counterpoise 208, and microstrip feed 204 may be formed on the substrate 206 in a variety of fashions. An etching process is just one example. Using an etching process, a conductive layer of material may be laminated, rolled-clad, or otherwise applied to each side of the substrate 206. The conductive material may be copper or other suitable material. The conductive material may then be etched away or otherwise removed from the substrate 206 in predetermined regions to form the poise 202 and microstrip feed 204 on one surface and the counterpoise 208 on the other. Alternatively, the poise 202, counterpoise 208 and micropstrip feed 204 may be deposited on the substrate using a metallization process, or any other method providing sufficient metal adhesion for the environmental conditions and the intended use of the antenna. These techniques are well known in the art.

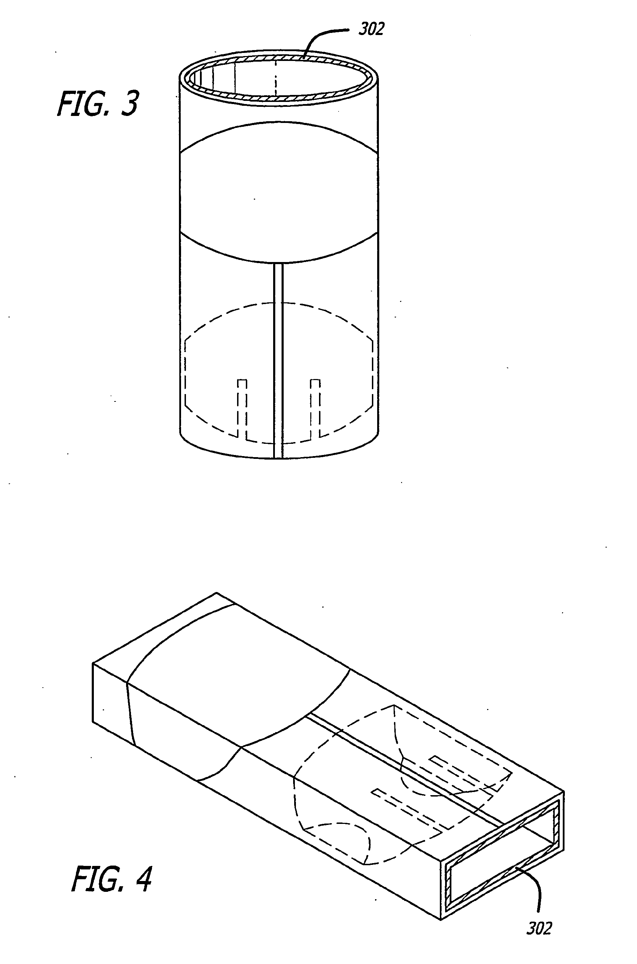

Once the poise 202, counterpoise 208 and microstrip feed 204 are formed onto the substrate 206, regardless of the method, the elliptic dipole antenna 108 may then be formed into a closed three-dimensional shape, such as a cylinder as shown in FIG. 3. The edges of the cylindrical flexible printed circuit board substrate 206 may be bonded together using a suitable adhesive. Increased structural integrity may be achieved by using a cylindrical core 302 to support the substrate 206. A core may be particularly useful to maintain an elliptic dipole antenna 108 that has shapes other than cylindrical, such as the rectangular elliptic dipole antenna shown in FIG. 4. In any event, the core should be a low loss material with a dielectric constant near unity such as ROHACELL® HF or any other suitable plastic material. The core may be solid or hollow. A hollow core tends to reduce the dielectric constant.

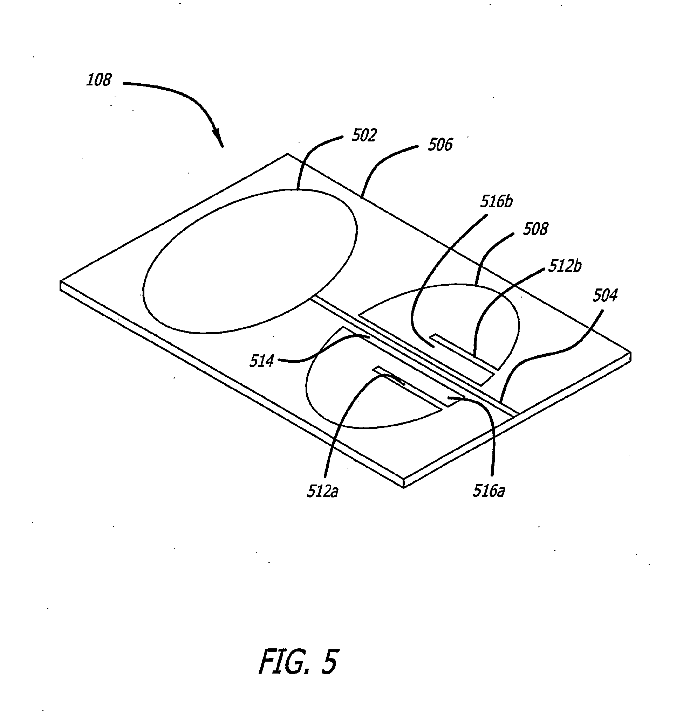

FIG. 5 is a perspective view illustrating an example of a flat elliptic dipole antenna with a coplanar waveguide feed and a flexible printed circuit board substrate. Unlike the microstrip feed with a ground plane below, a coplanar waveguide feed has a ground plane in the same plane. In this embodiment of the elliptic dipole antenna 108, a poise 502, counterpoise 508, and coplanar waveguide feed 504 is formed on the same surface of the substrate 506 either by etching, metallization, or any other suitable process. The coplanar waveguide feed 504 may extend through a feed gap 514 in the counterpoise 508 to the poise 502. A portion of the counterpoise 516a and 516b on both sides of the feed gap may be used to provide a ground plane for the coplanar waveguide feed 504. Two isolation gaps 512a and 512b may be used to separate the ground plane for the coplanar waveguide feed 504 from the remainder of the counterpoise 508.

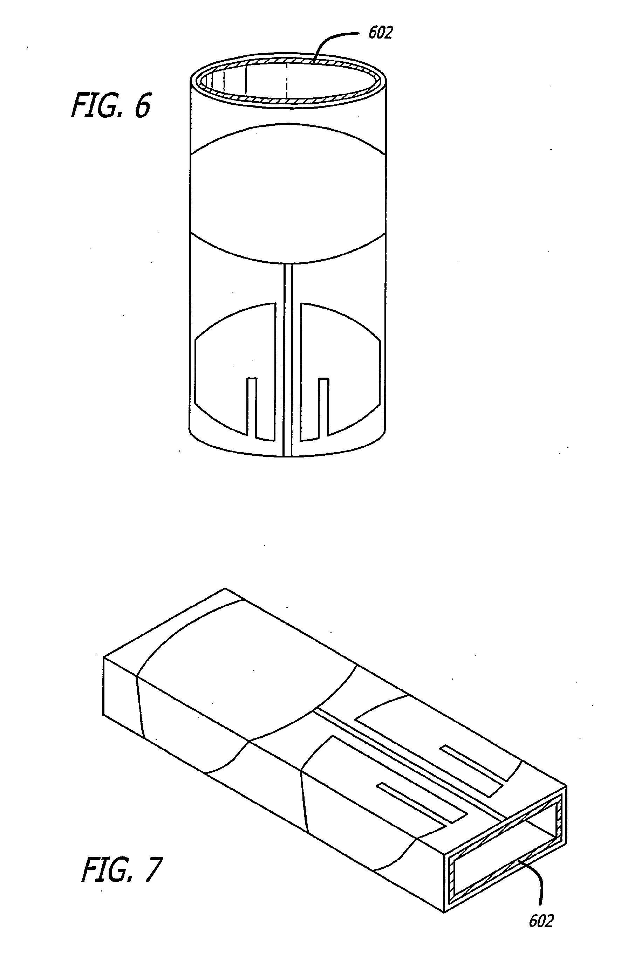

The elliptical dipole antenna with its coplanar waveguide feed may be formed into a closed three-dimension shape in the same fashion as the antennas shown in FIGS. 3 and 4. FIG. 6 is a perspective view illustrating an example of an elliptical dipole antenna with a coplanar waveguide feed formed around a cylindrical flexible printed circuit board substrate. The substrate 506 may be supported by a cylindrical core 602 similar to or the same as that described in connection with FIGS. 3 and 4. The cylindrical core 602 may be solid as shown in FIG. 6, or hollow. Alternatively, the elliptical dipole antenna 108 may simply be formed into a cylinder with the edges of the substrate 506 bonded together using a suitable adhesive. As explained earlier, a core may be necessary to maintain an elliptic dipole antenna 108 that has a shape other than cylindrical, such as the rectangular elliptic dipole antenna with the coplanar waveguide feed shown in FIG. 7.

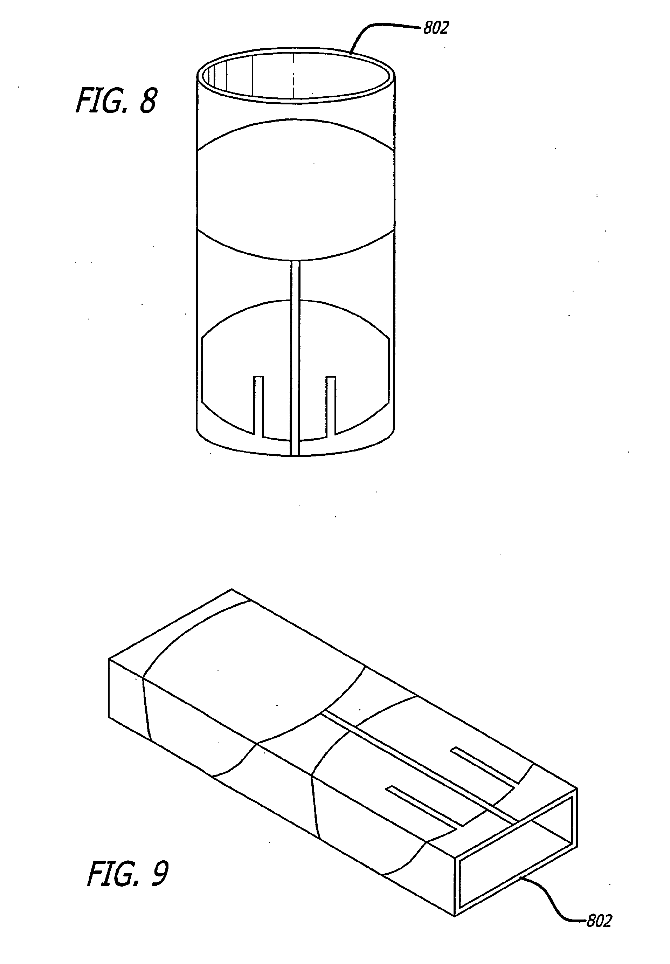

As an alternative to a flexible printed circuit board substrate, the poise 502, counterpoise 508, and coplanar waveguide feed 504 may be deposited on a plastic carrier using a metallization process. FIG. 8 is a perspective view illustrating an example of an elliptic dipole antenna with a coplanar waveguide feed formed around a plastic carrier. The plastic carrier 802 may be cylindrical as shown in FIG. 8, or rectangular as shown in FIG. 9. A hollow carrier may be preferred to reduce the dielectric constant, but a solid plastic carrier may also be used.

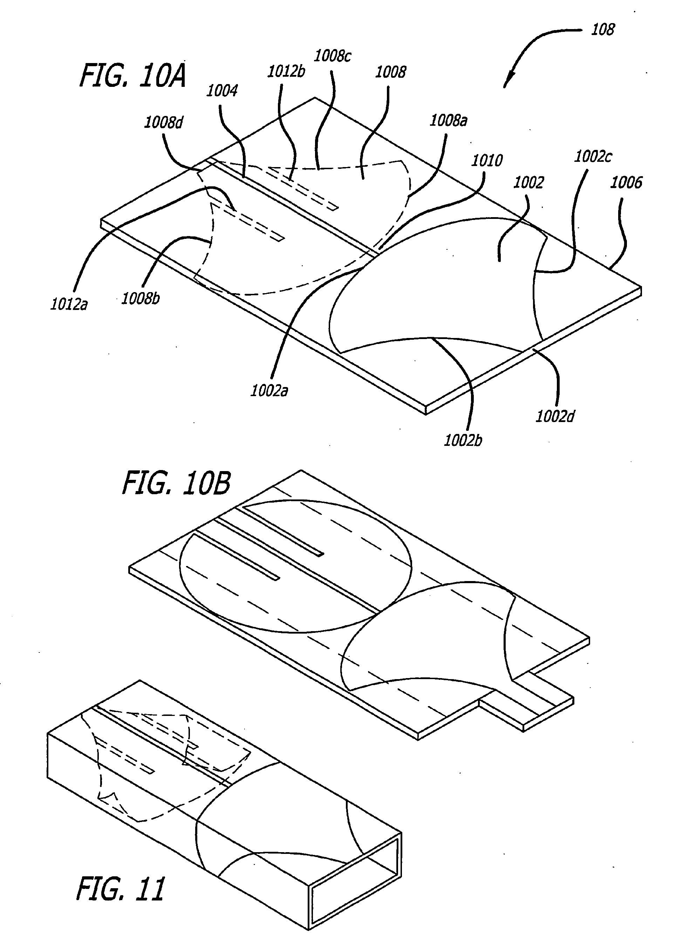

A further reduction in size of the elliptic dipole antenna 108 may be achieved by modifying the poise and counterpoise and then forming the antenna into a closed three-dimensional shape. More specifically, the poise and counterpoise may be formed as partial ellipses. FIG. 10A-10B is a perspective view illustrating an example of a flat elliptic dipole antenna having a partial elliptical poise with a microstrip feed and a flexible printed circuit board substrate. The phantom lines are edges hidden from view.

The elliptic dipole antenna 108 may include a half elliptical poise 1002 disposed on one side of the flexible printed circuit board substrate 1006. A microstrip feed 1004 may be coupled to the elliptical side of the poise 1002a. The opposite side of the poise may include two edges 1002b and 1002c having an inward taper that extends from the half ellipse portion of the poise and terminates into a tip 1002d at the distal end.

The elliptical dipole antenna 108 may also include a half elliptical counterpoise 1008 disposed on the side of the flexible printed circuit board substrate 1006 opposite the poise 1002. The counterpoise is shown with an elliptical side 1008a which is offset slightly from the elliptical side of the poise 1002a, in the plane of the substrate, to form a gap 1010 that can be excited by the microstrip feed 1004 in the transmit mode. Much like the poise 1002, the counterpoise also includes two edges 1008b and 1008c having an inward taper that extends from the half ellipse portion of the counterpoise to a straight edge 1008d at its distal end. Alternatively, the side of the counterpoise opposite the gap 1012 may be a straight edge or any other suitable edge configuration. Extending from each end of the straight edge 1008d is an isolation gap 1012a and 1012b. The isolation gaps 1012a and 1012b may be used to separate a portion of the counterpoise from a ground plane for the microstrip feed 1004.

FIG. 11 is a perspective view illustrating an example of a elliptic dipole antenna having a partial elliptical poise with a microstrip feed formed around a rectangular flexible printed circuit board substrate. A solid or hollow core (not shown) may also be used, especially when a flexible printed circuit board substrate is used in a non-cylinder antenna configuration. The tip of the poise 1002d may be bent over the end of the antenna 108 which further reduces the length of the antenna.

The previous description of the disclosed embodiments is provided to enable any person skilled in the art to make or use the present invention. Various modifications to these embodiments will be readily apparent to those skilled in the art, and the generic principles defined herein may be applied to other embodiments without departing from the spirit or scope of the invention. Thus, the present invention is not intended to be limited to the embodiments shown herein, but is to be accorded the full scope consistent with the claims, wherein reference to an element in the singular is not intended to mean "one and only one" unless specifically so stated, but rather "one or more." All structural and functional equivalents to the elements of the various embodiments described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

## Claims

1. An elliptic dipole antenna for portable devices, comprising: a poise and counterpoise each having an elliptical shape; and a substrate supporting the poise and counterpoise, **characterized in that** the substrate is a flexible substrate folded in a closed three-dimensional shape.

2. The elliptic dipole antenna of claim 1 wherein each of the poise and counterpoise comprises an ellipse.

3. The elliptic dipole antenna of claim 1 wherein each of the poise and counterpoise comprises a half ellipse.

4. The elliptic dipole antenna of claim 3 wherein the poise further comprises a folded tip.

5. The elliptic dipole antenna of claim 1 wherein said shape is cylindrical.

6. The elliptic dipole antenna of claim 1 wherein said shape is rectangular.

7. The elliptic dipole antenna of claim 1 wherein the substrate comprises a flexible printed circuit board.

8. The elliptic dipole antenna of claim 1 wherein the substrate comprises polyimide film.

9. The elliptic dipole antenna of claim 1 wherein the poise and counterpoise are disposed on opposite sides of the substrate.

10. The elliptic dipole antenna of claim 9 further comprising a microstrip feed coupled to the poise.

11. The elliptic dipole antenna of claim 10 wherein the counterpoise includes a portion which provides a ground plane for the microstrip strip feed, and wherein the counterpoise further comprises two isolation gaps to separate said portion from the remainder of the counterpoise.

12. The elliptic dipole antenna of claim 1 further comprising a core supporting the substrate.

13. The elliptic dipole antenna of claim 12 wherein the core comprises foam plastic.

14. The elliptic dipole antenna of claim 13 wherein the foam plastic core comprises polymethacrylimide.

15. The elliptic dipole antenna of claim 12 wherein the core is solid.

16. The elliptic dipole antenna of claim 12 wherein the core is hollow.

17. The elliptic dipole antenna of claim 1 wherein the poise and the counterpoise are disposed onto the outer surface of the substrate.

18. The elliptic dipole antenna of claim 17 further comprising a coplanar waveguide feed coupled to the poise.

19. The elliptic dipole antenna of claim 18 further comprising a feed gap extending through the counterpoise, and wherein the coplanar waveguide feed extends through the feed gap to the poise.

20. The elliptic dipole antenna of claim 19 wherein the counterpoise includes a portion on each side of the feed gap which provides a ground plane for the coplanar waveguide feed, and wherein the counterpoise further comprises two isolation gaps to separate said portions from the remainder of the counterpoise.

21. A wireless portable device, comprising: a transceiver; and an elliptic dipole antenna comprising a poise and counterpoise each having an elliptical shape, and a substrate supporting the poise and counterpoise, **characterized in that** the substrate is a flexible substrate folded in a closed three-dimensional shape.

22. The wireless device of claim 21 wherein each of the poise and counterpoise comprises an ellipse.

23. The wireless device of claim 21 wherein each of the poise and counterpoise comprises a half ellipse.

24. The wireless device of claim 23 wherein the poise further comprises a folded tip.

25. The wireless device of claim 21 wherein said shape is cylindrical.

26. The wireless device of claim 21 wherein said shape is rectangular.

27. The wireless device of claim 21 wherein the substrate comprises a flexible printed circuit board.

28. The wireless device of claim 21 wherein the substrate comprises polyimide film.

29. The wireless device of claim 21 wherein the poise and counterpoise are disposed on opposite sides of the substrate.

30. The wireless device of claim 29 wherein the elliptic dipole antenna further comprises a microstrip feed coupled to the poise.

31. The wireless device of claim 30 wherein the counterpoise includes a portion which provides a ground plane for the microstrip feed, and wherein the counterpoise further comprises two isolation gaps to separate said portion from the remainder of the counterpoise.

32. The wireless device of claim 21 wherein the elliptic dipole antenna further comprises a core supporting the substrate.

33. The wireless device of claim 32 wherein the core comprises plastic.

34. The wireless device of claim 33 wherein the plastic core comprises polymethacrylimide.

35. The wireless device of claim 32 wherein the core is solid.

36. The wireless device of claim 32 wherein the core is hollow.

37. The wireless device of claim 21 wherein the poise and the counterpoise are disposed onto the outer surface of the substrate.

38. The wireless device of claim 37 wherein the elliptic dipole antenna further comprises a coplanar waveguide feed coupled to the poise.

39. The wireless device of claim 38 further comprising a feed gap extending through the counterpoise, and wherein the coplanar waveguide feed extends through the gap to the poise.

40. The wireless device of claim 39 wherein the counterpoise includes a portion on each side of the feed gap which provides a ground plane for the coplanar waveguide feed, and wherein the counterpoise further comprises two isolation gaps to separate said portions from the remainder of the counterpoise.

## Patentansprüche

1. Eine elliptische Dipolantenne für tragbare Einheiten, aufweisend: ein Gewicht und Gegengewicht jeweils mit einer elliptischen Form; und ein Substrat, das das Gewicht und Gegengewicht unterstützt,
**dadurch gekennzeichnet, dass**
das Substrat ein flexibles Substrat ist, das in einer geschlossenen dreidimensionalen Form gefaltet ist.

2. Die elliptische Dipolantenne nach Anspruch 1, wobei jedes von dem Gewicht und Gegengewicht eine Ellipse aufweist.

3. Die elliptische Dipolantenne nach Anspruch 1, wobei jedes von dem Gewicht und Gegengewicht eine Halbellipse aufweist.

4. Die elliptische Dipolantenne nach Anspruch 3, wobei das Gewicht weiter eine gefaltete Spitze aufweist.

5. Die elliptische Dipolantenne nach Anspruch 1, wobei die Form zylindrisch ist.

6. Die elliptische Dipolantenne nach Anspruch 1, wobei die Form rechteckförmig ist.

7. Die elliptische Dipolantenne nach Anspruch 1, wobei das Substrat eine flexible gedruckte Leiterplatte aufweist.

8. Die elliptische Dipolantenne nach Anspruch 1, wobei das Substrat einen Polyimidfilm aufweist.

9. Die elliptische Dipolantenne nach Anspruch 1, wobei das Gewicht und Gegengewicht auf gegenüberliegenden Seiten von dem Substrat angeordnet sind.

10. Die elliptische Dipolantenne nach Anspruch 9, weiter aufweisend eine Mikrostreifenzuführung gekoppelt mit dem Gewicht.

11. Die elliptische Dipolantenne nach Anspruch 10, wobei das Gegengewicht einen Abschnitt beinhaltet, welcher eine Basisebene für die Mikrostreifenstreifenzuführung bereitstellt, und wobei das Gegengewicht weiter zwei Isolationsaussparungen aufweist, um den Abschnitt von dem Rest von dem Gegengewicht zu trennen.

12. Die elliptische Dipolantenne nach Anspruch 1, weiter aufweisend einen Kern, der das Substrat unterstützt.

13. Die elliptische Dipolantenne nach Anspruch 12, wobei der Kern Schaumkunststoff aufweist.

14. Die elliptische Dipolantenne nach Anspruch 13, wobei der Schaumkunststoffkern Polymethacrylimid aufweist.

15. Die elliptische Dipolantenne nach Anspruch 12, wobei der Kern massiv ist.

16. Die elliptische Dipolantenne nach Anspruch 12, wobei der Kern hohl ist.

17. Die elliptische Dipolantenne nach Anspruch 1, wobei das Gewicht und Gegengewicht auf der äußeren Oberfläche von dem Substrat angeordnet sind.

18. Die elliptische Dipolantenne nach Anspruch 17, weiter aufweisend eine koplanare Wellenleiterzuführung gekoppelt mit dem Gewicht.

19. Die elliptische Dipolantenne nach Anspruch 18, weiter aufweisend eine Zuführungsaussparung, die sich durch das Gegengewicht erstreckt, und wobei die koplanare Wellenleiterzuführung sich durch die Zuführungsaussparung bis zu dem Gewicht erstreckt.

20. Die elliptische Dipolantenne nach Anspruch 19, wobei das Gegengewicht einen Abschnitt an jeder Seite von der Zuführungsaussparung beinhaltet, welcher eine Basisebene für die koplanare Wellenleiterzuführung bereitstellt, und wobei das Gegengewicht weiter zwei Isolationsaussparungen aufweist, um die Abschnitte von dem Rest von dem Gegengewicht zu trennen.

21. Eine drahtlose tragbare Einheit, aufweisend: einen Sendeempfänger; und eine elliptische Dipolantenne aufweisend ein Gewicht und Gegengewicht jeweils mit einer elliptischen Form, und ein Substrat, das das Gewicht und Gegengewicht unterstützt,
**dadurch gekennzeichnet, dass**
das Substrat ein flexibles Substrat ist, das in einer geschlossenen dreidimensionalen Form gefaltet ist.

22. Die drahtlose Einheit nach Anspruch 21, wobei jedes von dem Gewicht und Gegengewicht eine Ellipse aufweist.

23. Die drahtlose Einheit nach Anspruch 21, wobei jedes von dem Gewicht und Gegengewicht eine Halbellipse aufweist.

24. Die drahtlose Einheit nach Anspruch 23, wobei das Gewicht weiter eine gefaltete Spitze aufweist.

25. Die drahtlose Einheit nach Anspruch 21, wobei die Form zylindrisch ist.

26. Die drahtlose Einheit nach Anspruch 21, wobei die Form rechteckförmig ist.

27. Die drahtlose Einheit nach Anspruch 21, wobei das Substrat eine flexible gedruckte Leiterplatte aufweist.

28. Die drahtlose Einheit nach Anspruch 21, wobei das Substrat einen Polyimidfilm aufweist.

29. Die drahtlose Einheit nach Anspruch 21, wobei das Gewicht und Gegengewicht auf gegenüberliegenden Seiten von dem Substrat angeordnet sind.

30. Die drahtlose Einheit nach Anspruch 29, wobei die elliptische Dipolantenne weiter aufweist eine Mikrostreifenzuführung gekoppelt mit dem Gewicht.

31. Die drahtlose Einheit nach Anspruch 30, wobei das Gegengewicht einen Abschnitt beinhaltet, welcher eine Basisebene für die Mikrostreifenzuführung bereitstellt, und wobei das Gegengewicht weiter zwei Isolationsaussparungen aufweist, um den Abschnitt von dem Rest von dem Gegengewicht zu trennen.

32. Die drahtlose Einheit nach Anspruch 21, wobei die elliptische Dipolantenne weiter einen Kern aufweist, der das Substrat unterstützt.

33. Die drahtlose Einheit nach Anspruch 32, wobei der Kern Kunststoff aufweist.

34. Die drahtlose Einheit nach Anspruch 33, wobei der Kunststoffkern Polymethacrylimid aufweist.

35. Die drahtlose Einheit nach Anspruch 32, wobei der Kern massiv ist.

36. Die drahtlose Einheit nach Anspruch 32, wobei der Kern hohl ist.

37. Die drahtlose Einheit nach Anspruch 21, wobei das Gewicht und Gegengewicht auf der äußeren Oberfläche von dem Substrat angeordnet sind.

38. Die drahtlose Einheit nach Anspruch 37, wobei die elliptische Dipolantenne weiter aufweist eine koplanare Wellenleiterzuführung gekoppelt mit dem Gewicht.

39. Die drahtlose Einheit nach Anspruch 38, weiter aufweisend eine Zuführungsaussparung, die sich durch das Gegengewicht erstreckt, und wobei die koplanare Wellenleiterzuführung sich durch die Aussparung bis zu dem Gewicht erstreckt.

40. Die drahtlose Einheit nach Anspruch 39, wobei das Gegengewicht einen Abschnitt an jeder Seite von der Zuführungsaussparung beinhaltet, welcher eine Basisebene für die koplanare Wellenleiterzuführung bereitstellt, und wobei das Gegengewicht weiter zwei Isolationsaussparungen aufweist, um die Abschnitte von dem Rest von dem Gegengewicht zu trennen.

## Revendications

1. Une antenne dipôle elliptique pour dispositifs portables, comprenant : un poids et un contrepoids ayant chacun une forme elliptique ; et un substrat supportant le poids et le contrepoids, **caractérisée en ce que** le substrat est un substrat flexible replié en une forme fermée tridimensionnelle.

2. L'antenne dipôle elliptique de la revendication 1, dans laquelle chacun du poids et du contrepoids comprend une ellipse.

3. L'antenne dipôle elliptique de la revendication 1, dans laquelle chacun du poids et du contrepoids comprend une demi-ellipse.

4. L'antenne dipôle elliptique de la revendication 3, dans laquelle le poids comprend en outre un bout plié.

5. L'antenne dipôle elliptique de la revendication 1, dans laquelle ladite forme est cylindrique.

6. L'antenne dipôle elliptique de la revendication 1, dans laquelle ladite forme est rectangulaire.

7. L'antenne dipôle elliptique de la revendication 1, dans laquelle le substrat comprend une carte de circuit imprimé flexible.

8. L'antenne dipôle elliptique de la revendication 1, dans laquelle le substrat comprend un film de polyimide.

9. L'antenne dipôle elliptique de la revendication 1, dans laquelle le poids et le contrepoids sont disposés sur des côtés opposés du substrat.

10. L'antenne dipôle elliptique de la revendication 9, comprenant en outre une alimentation en microruban couplée au poids.

11. L'antenne dipôle elliptique de la revendication 10, dans laquelle le contrepoids comprend une partie qui forme un plan de masse pour l'alimentation en microruban, et dans laquelle le contrepoids comprend en outre deux intervalles d'isolement pour séparer ladite partie du reste du contrepoids.

12. L'antenne dipôle elliptique de la revendication 1, comprenant en outre un coeur supportant le substrat.

13. L'antenne dipôle elliptique de la revendication 12, dans laquelle le coeur comprend une mousse de plastique.

14. L'antenne dipôle elliptique de la revendication 13, dans laquelle le coeur en mousse de plastique comprend du polyméthacrylimide.

15. L'antenne dipôle elliptique de la revendication 12, dans laquelle le coeur est plein.

16. L'antenne dipôle elliptique de la revendication 12, dans laquelle le coeur est creux.

17. L'antenne dipôle elliptique de la revendication 1, dans laquelle le poids et le contrepoids sont disposés sur la surface extérieure du substrat.

18. L'antenne dipôle elliptique de la revendication 17, comprenant en outre une alimentation de guide d'onde coplanaire couplée au poids.

19. L'antenne dipôle elliptique de la revendication 18, comprenant en outre un intervalle d'alimentation s'étendant au travers du contrepoids, et dans laquelle l'alimentation de guide d'onde coplanaire s'étend au travers de l'intervalle d'alimentation jusqu'au poids.

20. L'antenne dipôle elliptique de la revendication 19, dans laquelle le contrepoids inclut une portion de chaque côté de l'intervalle d'alimentation qui forme un plan de masse pour l'alimentation de guide d'onde coplanaire, et dans laquelle le contrepoids comprend en outre deux intervalles d'isolement pour séparer lesdites parties du reste du contrepoids.

21. Un dispositif portable sans fil, comprenant : un émetteur/récepteur ; et une antenne dipôle elliptique comprenant un poids et un contrepoids ayant chacun une forme elliptique, et un substrat supportant le poids et le contrepoids, **caractérisé en ce que** le substrat est un substrat flexible replié en une forme fermée tridimensionnelle.

22. Le dispositif portable de la revendication 21, dans lequel chacun du poids et du contrepoids comprend une ellipse.

23. Le dispositif portable de la revendication 21, dans lequel chacun du poids et du contrepoids comprend une demi-ellipse.

24. Le dispositif portable de la revendication 23, dans lequel le poids comprend en outre un bout plié.

25. Le dispositif portable de la revendication 21, dans lequel ladite forme est cylindrique.

26. Le dispositif portable de la revendication 21, dans lequel ladite forme est rectangulaire.

27. Le dispositif portable de la revendication 21, dans lequel le substrat comprend une carte de circuit imprimé flexible.

28. Le dispositif portable de la revendication 21, dans lequel le substrat comprend un film de polyimide.

29. Le dispositif portable de la revendication 21, dans lequel le poids et le contrepoids sont disposés sur des côtés opposés du substrat.

30. Le dispositif portable de la revendication 29, dans lequel l'antenne dipôle elliptique comprend en outre une alimentation en microruban couplée au poids.

31. Le dispositif portable de la revendication 30, dans lequel le contrepoids comprend une partie qui forme un plan de masse pour l'alimentation en microruban, et dans lequel le contrepoids comprend en outre deux intervalles d'isolement pour séparer ladite partie du reste du contrepoids.

32. Le dispositif portable de la revendication 21, comprenant en outre un coeur supportant le substrat.

33. Le dispositif portable de la revendication 32, dans lequel le coeur comprend du plastique.

34. Le dispositif portable de la revendication 33, dans lequel le coeur en plastique comprend du polyméthacrylimide.

35. Le dispositif portable de la revendication 32, dans lequel le coeur est plein.

36. Le dispositif portable de la revendication 32, dans lequel le coeur est creux.

37. Le dispositif portable de la revendication 21, dans lequel le poids et le contrepoids sont disposés sur la surface extérieure du substrat.

38. Le dispositif portable de la revendication 37, dans lequel l'antenne dipôle elliptique comprend en outre une alimentation de guide d'onde coplanaire couplée au poids.

39. Le dispositif portable de la revendication 38, comprenant en outre un intervalle d'alimentation s'étendant au travers du contrepoids, et dans lequel l'alimentation de guide d'onde coplanaire s'étend au travers de l'intervalle d'alimentation jusqu'au poids.

40. Le dispositif portable de la revendication 39, dans lequel le contrepoids inclut une portion de chaque côté de l'intervalle d'alimentation qui forme un plan de masse pour l'alimentation de guide d'onde coplanaire, et dans lequel le contrepoids comprend en outre deux intervalles d'isolement pour séparer lesdites parties du reste du contrepoids.
